# EUROPEAN PATENT SPECIFICATION

(11) **EP 0 502 629 B1**
(45) Date of publication and mention of the grant of the patent: **06.12.1995**
(21) Application number: 92301425.2
(22) Date of filing: 20.02.1992
(51) Int. Cl.: C02F 1/28, C02F 1/42, B01J 39/20, B01J 47/04

(54) **Process of removing from water suspended metal corrosion products insoluble or sparingly soluble in water**
Verfahren zum Entfernen aus Wasser von metallischen unlöslichen oder schwerlöslichen Korrosionsprodukten
Procédé pour enlever de l'eau des produits de corrosion métalliques insolubles ou difficilement solubles dans l'eau

(30) Priority: 20.02.1991 JP 25958/91; 17.12.1991 JP 333453/91
(43) Date of publication of application: 09.09.1992
(73) Proprietor: ROHM AND HAAS COMPANY, Philadelphia Pennsylvania 19105 (US)
(72) Inventor: Higosaki, Nobuyuki, Kiyose-shi, Tokyo (JP); Yagishashi, Tateo, Urawa-shi, Saitama-ken (JP); Ohuchi, Iwao, Fuchu-shi, Tokyo (JP); Kagawa, Takashi, Chiba-shi, Chiba-ken (JP); Kenmochi, Chika, Toshima-ku, Tokyo (JP)
(74) Representative: Tanner, James Percival

(56) References cited:
- EP-A- 0 117 315
- EP-A- 0 424 084
- FR-A- 2 511 614
- FR-A- 2 550 097
- GB-A- 902 347
- GB-A- 1 407 099
- WORLD PATENTS INDEX Week 7646, 2 October 1976 Derwent Publications Ltd., London, GB; AN 76-86048X
- RESEARCH DISCLOSURE vol. 295, 1988, NEW-YORK page 934; ANONYMOUS: 'CATION EXCHANGE RESINS WITH INCREASED OSMOTIC SHOCK RESISTANCE'

## Description

This invention is concerned with a process of treating water for power plants or the like. More specifically, this invention is concerned with a process of removing suspended metal corrosion products insoluble or sparingly soluble in water from water containing these products.

Proper quality much be maintained for the condensate used for boilers or at power plants in order to avoid the gradual adhesion of scale and other deposited solids. For the maintenance of the high purity of the condensate, purification equipment is usually installed. Representative of such equipment is an electromagnetic filter, a pre-coat filter and a condensate demineralizer. Such purification equipment is needed because fine suspending substances, insoluble or sparingly soluble in water, are inevitably produced inside the condensate system from metallic materials, such as iron, which have as their source the metal equipment which the condensate contacts. These finely divided, suspending substances are referred to herein as "crud", a term which serves as an acronym for "Corrosion Residuals and Unidentified Detritus". Filters such as electromagnetic filters and demineralizers are often installed in the condensate system for the removal of magnetic particles and ions, respectively.

The presence of these target substances to be removed is not necessarily a minor problem. They coat the inner surfaces of condensate and other lines, causing flow restrictions and blockages and reducing the efficiency of heat transfer. These effects lead to a reduction in the overall efficiency of the power plant and a reduction of its safety factors. Obviously, measures for removing the crud from the condensate at boiling-water-reactor (BWR) nuclear power plants, from that at pressurized-water-reactor (PWR) nuclear power plants, and from the boiler condensate at fossil-fuelled power plants are extremely important.

As a concrete example, the condensate at fossil-fuelled power plants will be described below. At these plants, steam generated by the boiler drives the turbine to generate electric power. The steam which exits from the turbine is cooled at the condenser into condensate, which is then recycled to the boiler. Accordingly, this condensate must be highly pure. To maintain the purity of the condensate, heretofore separate pieces of equipment have generally been installed; filters such as electromagnetic filters or pre-coat filters for the removal of crud, and mixed-bed demineralizers for the removal of ions, have been widely used. Equipment which would perform both of these functions would be particularly advantageous, and actually a mixed-bed demineralizer which can perform crud removal simultaneously with ion removal has been proposed.

In the condensate circulation system at fossil-fuelled and PWR-type nuclear power plants, an all volatile-substance treatment (AVT) has been employed and the pH of the condensate has been adjusted to 9.0-9.6 with addition of ammonia. In this pH range, the crud in the condensate mainly takes the form of strongly magnetic iron oxide (magnetite Fe₃0₄), and some of it forms mixed oxides (ferrites) with Cu, Ni, Cr, and Zn, which also possess strongly magnetic properties. Therefore, in some plants employing AVT, wave-like scale is produced inside the boiler tube, which increases the frictional resistance and results in a significant rise in boiler differential pressure. To cope with this, the boiler tubes are periodically washed with chemical scale-removing agents, but a highly effective corrosion-protection technology for the condensate has been desired from the viewpoints of powerplant reliability and cost reduction.

In a composite water treating method (CWT), which has been introduced recently, an extremely small quantity of oxygen is added to feed water to adjust its pH to 8.0-9.0. This causes a protective coat of trivalent iron oxide (α-hematite: Fe₂0₃) to form which helps to prevent corrosion. This CWT controls condensate contamination by metal from the piping, however the iron in the condensate changes from magnetite to hematite, which is difficult to remove with an electromagnetic filter. This would increase the crud load on the condensate demineralizer installed downstream of the filter.

Ion exchange resins, which have been used for the above-mentioned purification of condensate, are the gel-type resins or porous-type resins. For both types, the conventional ion exchange resins obtained by introducing ion exchange groups into styrene-divinylbenzene copolymers are widely used.

As the major function of the condensate demineralizer is demineralization, conventional cation exchange resins and anion exchange resins are considered appropriate for use in such demineralizers; these have matrices of styrene-divinylbenzene copolymers. However, these ion exchange resins are not necessarily good for the crud removal through filtration and adsorption.

As the crud generally carries a positive charge, it is adsorbed preferentially on cation exchange resins. Part of the crud adsorbed on the surface of a cation exchange resin is thought to be dissolved by the sulfonic acid group on the resin surface; it then becomes metal ions with positive charges, and these are held by the sulfonic acid group. In this process of adsorption, the efficiency of crud adsorption is considered subject to the structure of the resin. To provide a solution to the above-mentioned problems in condensate treatment, Japanese Unexamined Patent Publications Nos. Sho 60-1598, Sho 59-52576 and Sho 58-137486 have proposed to adjust the particle size of the conventional cation exchange resins and anion exchange resins obtained from styrene-divinylbenzene copolymers, which are used in preparing the mixed bed. Japanese Unexamined Publication No. Hei-174998 has proposed to use conventional resins whose divinylbenzene crosslinking is relatively low. In addition, Japanese Unexamined Patent Publication No. Sho 58-76146 has proposed a technique to use a weak-acid cation exchange resin in the mixed bed. These techniques, however, have not been sufficient to solve the problems.

As described above, the cation exchange resin used in a condensate demineralizer should efficiently remove the crud as well as the cationic substances.

EP-A-0 424 084 discloses a process for the treatment of power plant condensate water which contains colloidal iron, which comprises contacting the condensate water with a mixed-bed ion exchanger. However, it does not disclose, or teach, the use of the specific cation exchange resin used in the present invention.

From investigation of the matrix structures of ion exchange resins, we have found that a cation exchange resin, whose matrix is a copolymer prepared by polymerizing an aromatic monovinyl compound and crosslinking agents of an aromatic polyvinyl compound and an ester-type polyvinyl compound, is excellent in removing the crud from condensate.

According to the present invention there is provided a process of removing suspended metal corrosion products insoluble or sparingly soluble water from water containing the metal corrosion products, the process comprising treating water, for example condensate from power plants and in particular water of a condensate circulation system operated by CWT or the neutral water-treatment method at power plants, with a cation exchange resin obtained by introducing a cation exchange group into a copolymer matrix which is prepared from an aromatic monovinyl compound and crosslinking agents of an aromatic polyvinyl compound and an ester-type polyvinyl compound, and wherein the ester-type polyvinyl compound is present at from 5 to 20 weight percent of the total of the aromatic monovinyl compound and the crosslinking agents. In one embodiment of the invention the water is treated with a cation filter charged with the cation exchange resin.

In one embodiment of the process of the present invention the water is treated with a mixed-bed of an anion exchange resin and the cation exchange resin. The weight-weight mixing ratio of the cation exchange resin to the anion exchange resin is preferably in the range from 5:1 to 1:5, more preferably from 2:1 to 1:2.

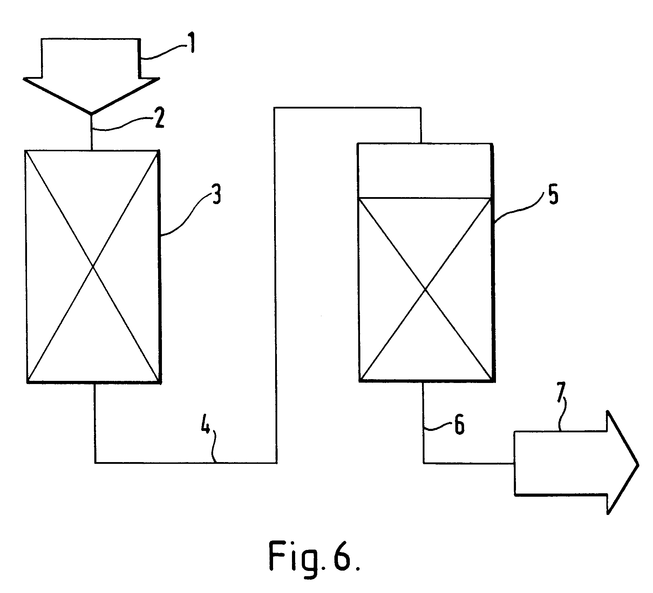

The process of the present invention may be carried out utilizing condensate treating equipment (see, for example, Fig 6 of the accompanying drawings) installed in condensate circulation systems, e.g. of power plants, which equipment is characterized by possessing a cation filter charged with the cation exchange resin.

A mixed-bed demineralizing column charged with a cation resin and an anion exchange resin, may be located downstream of the cation filter. The downstream mixed-bed demineralizer should be charged with a cation exchange resin with a greater ion exchange capacity than that of said cation exchange resin used in the cation filter. For the cation exchange resin to be used in the downstream mixed-bed demineralizer, those prepared from the above-mentioned styrene-divinylbenzene copolymers may be cited.

Alternatively, the condensate treating equipment may be installed in condensate circulation systems, which equipment is characterized by possessing a mixed-bed demineralizing column charged with an anion exchange resin and a cation exchange resin obtained by introducing a cation exchange group into a copolymer matrix which is prepared from an aromatic monovinyl compound and crosslinking agents of an aromatic polyvinyl compound and an ester-typed polyvinyl compound, and wherein the ester-typed polyvinyl compound is present at from 5 to 20 weight percent of the total of the aromatic monovinyl compound and the crosslinking agents.

This invention provides a process of removing the crud from water, including condensate, by treating the water with a mixed-bed of an anion exchange resin and a cation exchange resin obtained by introducing a cation exchange group into a copolymer matrix which is prepared from an aromatic monovinyl compound and crosslinking agents of an aromatic polyvinyl compound and an ester-type polyvinyl compound, and wherein the ester-typed polyvinyl compound is present at from 5 to 20 weight percent of the total of the aromatic monovinyl compound and the crosslinking agents.

The process of the present invention is especially effective if the condensate treating equipment is installed in a condensate circulation system operated by CWT or the neutral water treatment method.

The cation exchange resin to be used for this invention may be in the form of either beads or powder.

If a cation exchange resin and an anion exchange resin are used in the form or powder to form a mixed-bed, they are pre-coated on filter elements, and the condensate is passed through the pre-coat layer of the mixed resin.

The cation-exchange resin used in this invention, either in bead or powder form, is usually converted into the free acid (H+) form before it is used for treating the condensate. Therefore, for demineralizing the condensate, the cation exchange resin of H+ form and an anion exchange resin of hydroxyl (OH-) form are usually used. Additionally, in some cases, for example when treating condensate in fossil-fuelled power plants, a mixed-bed consisting of the cation exchange resin of ammonium form and an anion exchange resin of OH- form may be used in a mixed-bed. For the anion exchange resin, any resin may be used if it may be mixed with the cation exchange resin of this invention without deleterious effect on either resin.

The cation exchange resin used in this invention is obtained by introducing a cation exchange group into a copolymer matrix which is prepared by polymerizing an aromatic monovinyl compound and crosslinking agents of an aromatic polyvinyl compound and an ester-type polyvinyl compound. For the aromatic monovinyl compound, styrene, vinyl toluene, vinyl xylene, ethyl styrene, chlorostyrene and the like may be cited. For the aromatic polyvinyl compound as a crosslinking agent, divinylbenzene is a typical example. Divinyltoluene, divinylnaphthalene, trivinylbenzene and the like may also be used alone or in mixtures with one another or with divinylbenzene. For the ester-type polyvinyl compound as a crosslinking agent, ethylene glycol dimethacrylate, diethylene glycol dimethacrylate, propylene glycol dimethacrylate, neopentyl glycol dimethacrylate, trimethylolpropane trimethacrylate and the like, and their corresponding acrylates, alone or as mixtures with one another, may be used.

The quantity of the aromatic polyvinyl compound and ester-type polyvinyl compound(s) as crosslinking agents is preferably 7-50 weight percent, based on the total weight of all the vinyl compounds used. The quantity of the ester-type polyvinyl compound(s) is 5-20 weight percent, based on the total weight of all the vinyl compounds used. If it is less than 5 weight percent, crud-removal capacity of the resin becomes insufficient. If it exceeds 20 weight percent, the ion exchange capacity of the cation exchange resin is adversely influenced. The above-mentioned vinyl compounds may be polymerized by a conventional polymerization method such as suspension polymerization, solution polymerization, emulsion polymerization, and bulk polymerization, but preferably they should be suspension-polymerized in an aqueous medium in the presence of a conventional dispersant, polymerization initiator and stabilizer and other polymerization adjuvants known to those skilled in the art. At the time of polymerization, it is also possible to add to the polymerization system one or more pore-forming materials such as toluene, amyl alcohol, iso-octane, linear polymers and the like in amounts sufficient to create porosity or other advantageous physical properties in the cation exchange resin. The copolymer obtained by the above-described polymerization method may be in the form of either bead or powder.

The copolymer thus obtained may be functionalized with a sulfonating agent according to a conventional method. One such method involves using a sulfonating agent such as sulfuric acid, chlorosulfonic acid or oleum (fuming sulfuric acid), in the presence or absence of an organic solvent which can swell the copolymer matrix.

The process of this invention is applicable to the treatment of condensate in the fields of boilers, fossil-fuelled power plants, nuclear power plants, driers for paper manufacturing and the like. In particular, this process reveals efficacy in removing the crud as well as impurity ions when demineralizing the condensate of BWR-type nuclear power plants which is treated by the neutral water treating method, the condensate (secondary coolant water) of PWR-type nuclear power plants and the condensate of fossil-fuelled power plants.

The following Examples, in conjunction with the accompanying drawings, are presented to illustrate the preferred embodiments of the present invention. All ratios and percentages used herein are by weight unless otherwise specified, and all reagents used are of good commercial quality unless otherwise specified.

In the accompanying drawings:

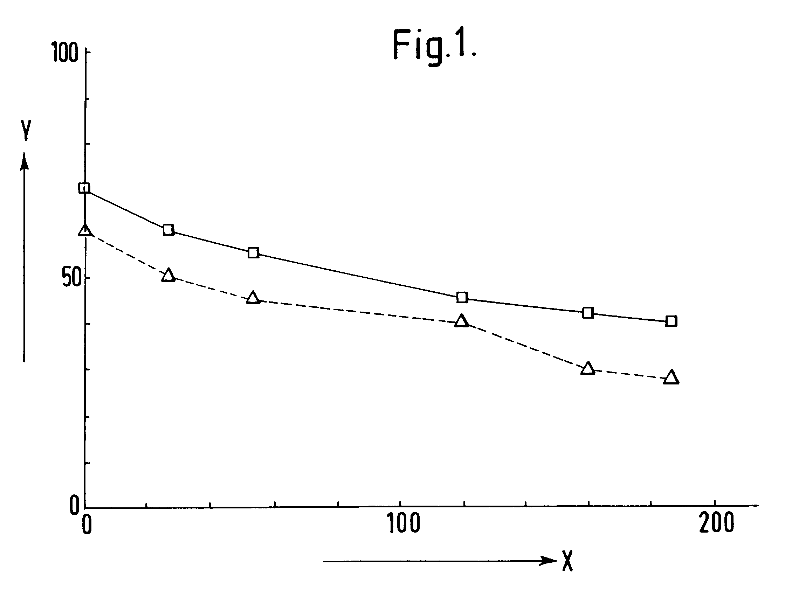

Fig. 1 shows the iron removal effect revealed in the experiment of Example 4. The square marks represent the resin of Example 1, below, and the triangular marks represent Amberlite IR-120B ion exchange resin, described below. The axis marked X is the Feeding Time in hours, and the axis marked Y is the Iron Removal Ratio (%)

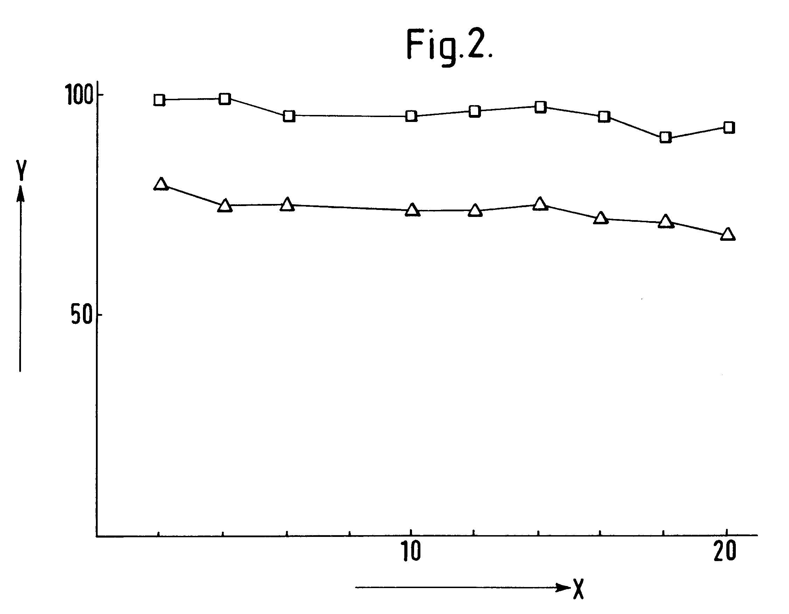

Fig. 2 shows the iron removal effect revealed in the experiment of Example 5. The square marks represent the resin of Example 3, below, and the triangular marks represent Amberlite 200C ion exchange resin, described below. The axis marked Y is the same as in Fig. 1, but the axis marked X is the Feeding Time in days.

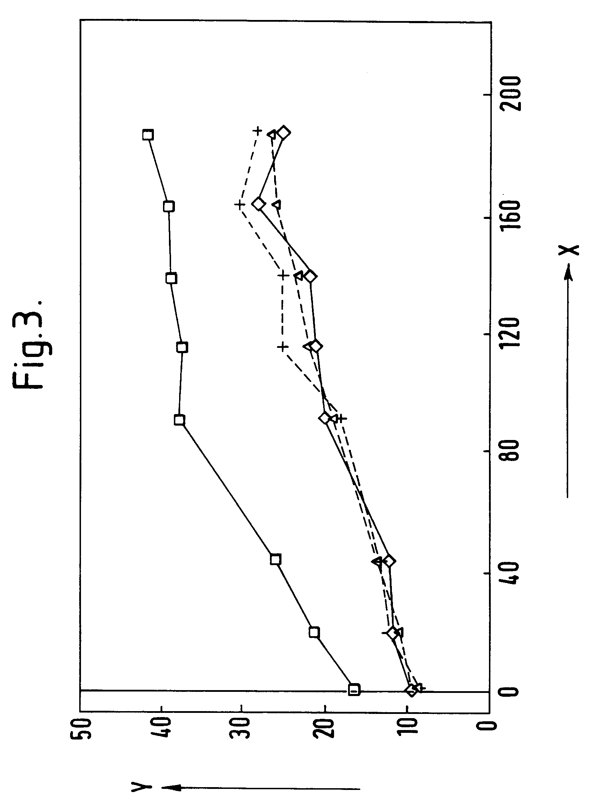

Fig. 3 shows the iron removal effect revealed in the experiment of Example 6. The cross marks represent the resin of Example 1, below, the diamond marks represent the resin of Example 2, below, the triangular marks represent the resin of Example 3, below, and the square marks represent Amberlite IR-120B ion exchange resin, described below. The axis marked X is the same as Fig 1, and the axis marked Y is the Iron Concentration in micrograms per liter.

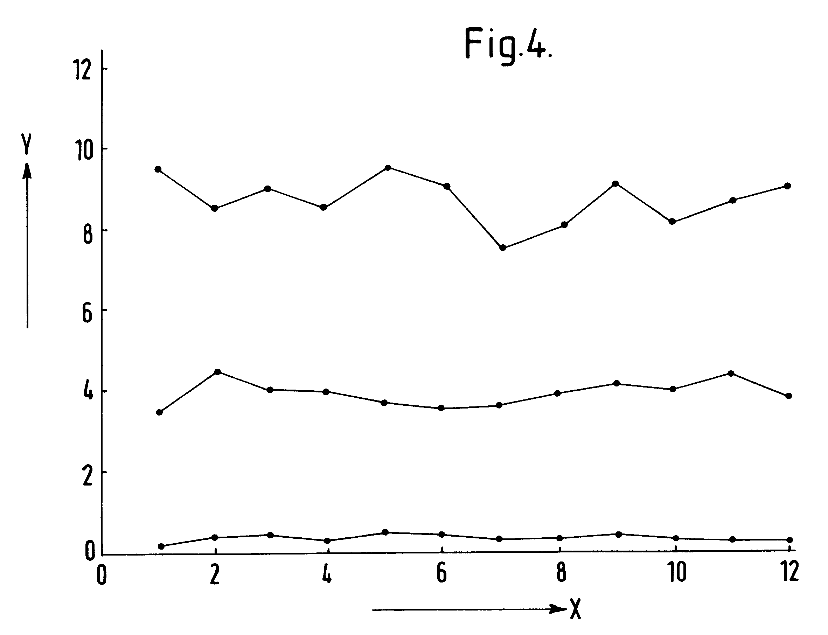

Fig. 4 shows the iron removal effect revealed in the experiment of Example 7. The upper curve represents iron concentration in the synthetic condensate to be treated, the middle curve represents iron concentration in the effluent from the mixed Amberlite 200C/Amberlite IRA-900 ion-exchange resin bed, and the lower curve represents iron concentration in the effluent from the mixed bed containing the resin of Example 2 with Amberlite IRA-400T ion exchange resin. The axis marked Y is the same as in Fig. 3 but the axis marked X is the Feeding Time in days.

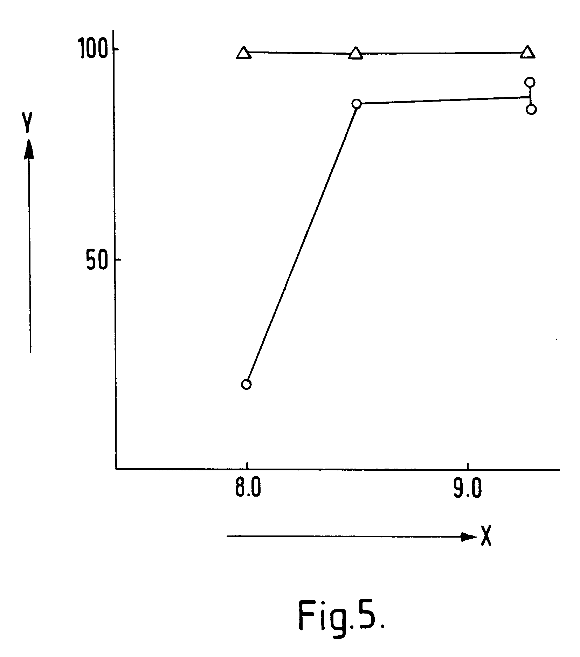

Fig. 5 shows the iron removal effect revealed in the experiment of Example 8. The circles represent an electromagnetic filter of the prior art, and the triangles represent the cation filter of the present invention. The X axis is pH, and the Y axis is the Iron Removal in percent.
Fig. 6 is a flow chart illustrating the combination of a cation filter and a mixed-bed demineralizer. In the figure, 1 represents the condensate pump, 3 represents the cation filter, 5 represents the condensate demineralizer, 7 represents the low-pressure heater, 2 represents the inlet line, 4 represents the connecting line between the cation filter and the condensate demineralizer, and 6 represents the outlet line from the condensate demineralizer.

### Example 1

This Example illustrates preparation of a cation-exchange resin useful in the present invention.

According to a conventional method, 372 g of styrene, 56 g divinylbenzene (56% purity) and 72 g trimethylolpropane trimethacrylate were polymerized in an aqueous medium containing a dispersant and conventional adjuvants in the presence of a polymerization initiator. A polymer of small spherical particles was obtained. This polymer was sulfonated with concentrated sulfuric acid to obtain a cation exchange resin. The moisture content of this resin was 54.5% and its ion exchange capacity was 1.61 milliequivalents/milliliter (meq/ml).

### Example 2

This Example illustrates preparation of another cation-exchange resin useful in the present invention.

According to a conventional method, 372 g styrene, 56 g divinylbenzene (59% purity) and 72 g trimethylolpropane trimethacrylate were polymerized in an aqueous medium containing a dispersant and conventional adjuvants in the presence of 5 g linear polystyrene and a polymerization initiator. A polymer of small spherical particles was obtained. This polymer was sulfonated with concentrated sulfuric acid to obtain a cation exchange resin. The moisture content of this resin was 56.1% and its ion exchange capacity was 1.46 meq/ml.

### Example 3

This Example illustrates preparation of another cation exchange resin useful in the present invention, and having as one of the crosslinking monomers ethylene glycol dimethacrylate rather than trimethylolpropane trimethacrylate.

A cation exchange resin was synthesized using the method of Example 1, except that 100 g of ethylene glycol dimethacrylate was used instead of the trimethylolpropane trimethacrylate. The moisture content of the resulting resin was 53.6% and its ion exchange capacity was 1.5 meq/ml.

### Example 4

This Example illustrates use of the cation exchange resin of Example 1 in the condensate purification method of the present invention. 30 ml of the cation exchange resin (in H⁺ form) prepared in Example 1 was charged in an acrylic column (15 mm inside diameter. x 250 mm long) to form a single bed. The synthetic condensate described below was fed to the resin bed at 30°C at a linear velocity of 105 m/hr. The concentration of iron at the column outlet was measured. Fig. 1 shows changes in the iron concentration with passage of time.

The synthetic condensate was obtained by dispersing, in pure water (0.1 »s/cm or less in electric conductivity and 50 »g/liter in dissolved oxygen content), iron oxides (composed of 50% electrolytic iron, 20% α-Fe₂O₃, 15% Fe₃O₄, 5% α-FeOOH and 10% γ-FeOOH) so that the total iron in the water was 50 ppb.

For comparison, a similar experiment was carried out using a widely used gel-type, styrene-8% divinylbenzene cation exchange resin, Amberlite IR-120B. The results of this experiment are also shown in Fig. 1.

### Example 5

1,000 ml of the cation exchange resin in H⁺ form, prepared according to Example 3, was charged in an acrylic column (33 mm inside diameter x 1,500 mm long) to form a single bed. The bed depth in the column was about 1,100 mm.

Actual condensate (under CWT operation) was fed to the resin bed at a linear velocity of 80 m/hr. The concentration of iron in the condensate and at the column outlet was measured, and the results are shown in Fig. 2.

For comparison, a similar experiment was carried out using a widely used, macroreticular, styrene-20% divinylbenzene cation exchange resin, Amberlite 200C, in the same quantity. The results are also shown in Fig. 2.

### Example 6

20-ml samples of each of the cation exchange resins in H+ form, prepared according to Examples 1 - 3, were separately mixed with 10 ml of a gel-type, styrene-divinylbenzene anion exchange resin, Amberlite IRA-400T, and each of the mixtures was charged in a glass column (15 mm inside diameter x 250 mm long). The bed depth in the column was 150 mm. The same condensate used in Example 4 was fed to the column at 30°C and at a linear velocity of 105 m/hr. The concentration of iron at the column outlet was measured. The changes in the iron concentration with passage of time are shown in Fig. 3. For comparison, a similar experiment was carried out using widely used cation and anion exchange resins, Amberlite IR-120B and Amberlite IRA-400T, described above, in the same quantities and ratios as described above; the results are also shown in Fig. 3.

### Example 7

660 ml of the cation exchange resin in H⁺ form, prepared according to Example 2, was mixed with 330 ml of the anion exchange resin, Amberlite IRA-400T, in OH⁻ form, and the mixture was charged in an acrylic column 33 mm inside diameter x 2,500 mm long. The bed depth in the column was about 1,100 mm. Actual condensate was fed to the resin bed at a linear velocity of 80 m/hr. The concentration of iron in the condensate and at the column outlet was measured, and the results are shown in Fig. 4.

For comparison, this procedure was repeated with a widely used cation exchange resin, Amberlite 200C, mixed with a widely used anion exchange resin Amberlite IRA-900. These results are also shown in Fig. 4.

### Example 8

1,000 ml of the cation exchange resin in H⁺ form, prepared in Example 3, was charged in a acrylic column 33 mm inside diameter x 1,500 mm long, to form a single bed. The bed depth in the column was about 1,100 mm. Actual condensate under the operation of AVT (pH of the condensate: 9.3) and CWT (pH of the condensate: 8.0, 8.5) was fed to the resin bed at a linear velocity of 80 m/hr. The pH of the condensate and the iron removal ratio were measured. The results are shown in Table 1 and Fig. 5. For comparison, the iron-removal ratio with an electromagnetic filter, a conventional device, is also given.

**Table 1**

| Total iron g/L | | | | |
|---|---|---|---|---|
| | pH | Feed Water | Treated water | % removal |
| Electromagnetic filter | 8.0 | 10 | 8 | 20 |
| | 8.5 | 7 | 0.9 | 87 |
| | 9.3 | 15 | 1.2 | 92 |
| | 9.3 | 6 | 0.9 | 85 |
| Cation filter | 8.0 | 10 | 0.1 or less | 99 or more |
| | 8.5 | 7 | 0.1 or less | 99 or more |
| | 9.3 | 15 | 0.1 or less | 99 or more |

The above Examples illustrate that, compared to the conventional condensate treating process, the process of this invention can provide highly pure water with lower iron concentrations, with the following specific benefits: (1) when a CWT process is used, crud which is difficult to remove with an electromagnetic filter can be removed, and (2) at power plants, the crud-removal effect of condensate demineralizers and condensate filters can be improved. As a result, the quantity of crud brought by the coolant water to the reactor can be reduced at BWR-type nuclear power plants, which reduces the frequency of repairs and replacements and the likelihood of worker exposure to radiation. At fossil-fuelled power plants using CWT, installation of the cation filter reduces the load on condensate demineralizers, allowing stable production of highly purified condensate.

Amberlite is a trademark of Rohm and Haas Company, Philadelphia, Pennsylvania, U.S.A., which may be registered in some of the designated states.

## Claims

1. A process of removing suspended metal corrosion products insoluble or sparingly soluble in water from water containing the metal corrosion products, which process is characterized by treating the water with a cation exchange resin obtained by introducing a cation exchange group into a copolymer matrix which is prepared from an aromatic monovinyl compound and crosslinking agents of an aromatic polyvinyl compound and an ester-type polyvinyl compound, and wherein the ester-type polyvinyl compound is present at from 5 to 20 weight percent of the total of the aromatic monovinyl compound and the crosslinking agents.

2. A process as claimed in claim 1, wherein the crosslinking agents are present at from 7 to 50 weight percent based on the total weight of the aromatic monovinyl compound and the crosslinking agents.

3. A process as claimed in claim 1 or claim 2, wherein the water containing the metal corrosion products is water of a condensate circulation system which is operated, at power plants, by the composite water treating method or the neutral water treating method.

4. A process as claimed in any preceding claim, wherein the water is treated with a cation filter charged with the cation exchange resin.

5. A process as claimed in any of claims 1 to 3, wherein the water is treated with a mixed bed of an anion exchange resin and the cation exchange resin.

6. A process as claimed in claim 5, wherein the cation exchange resin and the anion exchange resin are present in the mixed bed at a weight-weight ratio from 5:1 to 1:5, preferably at a weight-weight ratio from 2:1 to 1:2.

## Patentansprüche

1. Verfahren zum Entfernen von suspendierten Metallkorrosionsprodukten, die in Wasser unlöslich oder kaum löslich sind, aus Wasser, welches die Metallkorrosionsprodukte enthält, welches Verfahren dadurch gekennzeichnet ist, daß das Wasser mit einem Kationenaustauscherharz behandelt wird, welches durch Einbringen einer Kationenaustauschergruppe in eine Copolymermatrix erhalten wird, welche aus einer aromatischen Monovinylverbindung und Vernetzungsmitteln einer aromatischen Polyvinylverbindung und einer Polyvinylverbindung vom Ester-Typus hergestellt wird, und wobei die Polyvinylverbindung vom Ester-Typus zu 5 bis 20 Gewichtsprozent der Summe aus der aromatischen Monovinylverbindung und den Vernetzungsmitteln vorhanden ist.

2. Verfahren, wie in Anspruch 1 beansprucht, wobei die Vernetzungsmittel zu 7 bis 50 Gewichtsprozent, bezogen auf das Gesamtgewicht der aromatischen Monovinylverbindung und der Vernetzungsmittel vorhanden sind.

3. Verfahren, wie in Anspruch 1 oder in Anspruch 2 beansprucht, wobei das Wasser, welches die Metallkorrosionsprodukte enthält, Wasser eines Kondensat-Zirkulierungssystems ist, welches in Kraftwerken nach dem Kompositwasseraufbereitungsverfahren oder nach dem Neutralwasserautbereitungsverfahren betrieben wird.

4. Verfahren, wie in einem vorhergehenden Anspruch beansprucht, wobei das Wasser mit einem Kationenfilter, der mit dem Kationenaustauscherharz beschickt ist, behandelt wird.

5. Verfahren, wie in einem der Ansprüche 1 bis 3 beansprucht, wobei das Wasser mit einem Mischbett aus einem Anionenaustauscherharz und dem Kationenaustauscherharz behandelt wird.

6. Verfahren, wie in Anspruch 5 beansprucht, wobei das Kationenaustauscherharz und das Anionenaustauscherharz in dem Mischbett in einem Gewichts/Gewichtsverhältnis von 5:1 bis 1:5, vorzugsweise in einem Gewichts/Gewichtsverhältnis von 2:1 bis 1:2, vorhanden ist.

## Revendications

1. Procédé d'élimination de produits de corrosion de métaux en suspension, insolubles ou médiocrement solubles dans l'eau, d'une eau contenant les produits de corrosion de métaux, caractérisé en ce que l'on traite l'eau par une résine échangeuse de cations obtenue par l'introduction d'un groupe échangeur de cations dans une matrice de copolymère, que l'on prépare à partir d'un composé monovinylaromatique et d'agents de réticulation d'un composé polyvinylaromatique et d'un composé polyvinylique du type ester et en ce que le composé polyvinylique du type ester est présent à raison de 5 à 20% en poids du total du composé monovinylaromatique et des agents de réticulation.

2. Procédé suivant la revendication 1, caractérisé en ce que les agents de réticulation sont présents à raison de 7 à 50% en poids sur base du poids total du composé monovinylaromatique et des agents de réticulation.

3. Procédé suivant la revendication 1 ou la revendication 2, caractérisé en ce que l'eau contenant les produits de corrosion de métaux est de l'eau provenant d'un système de circulation d'un condensat, que l'on met en oeuvre dans des centrales de production d'énergie électrique par la méthode de traitement d'eau composite, ou la méthode de traitement d'eau neutre.

4. Procédé suivant l'une quelconque des revendications précédentes, caractérisé en ce que l'on traite l'eau par un filtre à cations chargé de la résine échangeuse de cations.

5. Procédé suivant l'une quelconque des revendications 1 à 3, caractérisé en ce que l'on traite l'eau par un lit mixte d'une résine échangeuse d'anions et de la résine échangeuse de cations.

6. Procédé suivant la revendication 5, caractérisé en ce que la résine échangeuse de cations et la résine échangeuse d'anions sont présentes dans le lit mixte en un rapport pondéral de 5:1 à 1:5, de préférence en un rapport pondéral de 2:1 à 1:2.
